(19) Europäisches Patentamt
European Patent Office
Office européen des brevets

(11) **EP 4 389 724 A1**

(12) **DEMANDE DE BREVET EUROPEEN**

(43) Date de publication:
**26.06.2024 Bulletin 2024/26**

(21) Numéro de dépôt: **23216320.4**

(22) Date de dépôt: **13.12.2023**

(51) Classification Internationale des Brevets (IPC):
**C04B 37/02** (2006.01)    **G21C 3/07** (2006.01)
**C04B 35/645** (2006.01)    **C04B 35/628** (2006.01)

(52) Classification Coopérative des Brevets (CPC):
**G21C 3/07; C04B 35/6455; C04B 37/021;**
C04B 35/62873; C04B 2235/522; C04B 2235/5244;
C04B 2235/5248; C04B 2235/6567;
C04B 2237/365; C04B 2237/38; C04B 2237/403;
C04B 2237/704; C04B 2237/706; C04B 2237/765;
C04B 2237/84

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**KH MA MD TN**

(30) Priorité: **23.12.2022 FR 2214402**

(71) Demandeur: **Commissariat à l'énergie atomique
et aux énergies alternatives
75015 Paris (FR)**

(72) Inventeurs:
• **LORRETTE, Christophe
91310 MONTLHERY (FR)**
• **DUMERVAL, Marie
91360 VILLEMOISSON-SUR-ORGE (FR)**
• **NONY, Guillaume
91390 MORSANG-SUR-ORGE (FR)**

(74) Mandataire: **Brevalex
Tour Trinity
1 B Place de la Défense
92400 Courbevoie (FR)**

(54) **PROCÉDÉ DE MÉTALLISATION DE LA FACE INTERNE D'UN TUBE EN UNE CÉRAMIQUE OU UN COMPOSITE À MATRICE CÉRAMIQUE**

(57) L'invention se rapporte à un procédé de métallisation de la face interne (14) d'un tube (12) en une céramique ou en un composite à matrice céramique.

Ce procédé comprend au moins une étape de placage d'un tube métallique (10) sur la face interne (14) du tube (12) en céramique ou composite à matrice céramique, et est caractérisé en ce que le placage comprend un fluage du tube métallique (10) par application à ce tube d'une pression interne et d'un chauffage, le fluage se traduisant par une augmentation du diamètre externe (d1) du tube métallique (10) jusqu'à ce que la face externe (16) du tube métallique (10) se plaque sur la face interne (14) du tube (12) en céramique ou composite à matrice céramique.

L'invention se rapporte également à un procédé de fabrication d'une gaine tubulaire d'un combustible nucléaire mettant en oeuvre le procédé de métallisation.

FIG. 1

EP 4 389 724 A1

**Description**

**DOMAINE TECHNIQUE**

L'invention se rapporte au domaine de la métallisation d'éléments tubulaires.

Plus spécifiquement, l'invention se rapporte à un procédé permettant de métalliser - le terme « métalliser » étant pris ici au sens d'associer une couche métallique avec - la face interne d'un tube à base d'une céramique, c'est-à-dire constitué d'une céramique ou d'un composite à matrice céramique, ce procédé permettant notamment d'obtenir une cohésion entre la face interne du tube et la couche métallique qui est associée à cette face interne.

L'invention trouve, en premier lieu, application dans l'industrie nucléaire pour le gainage de combustibles nucléaires et, plus particulièrement, de combustibles nucléaires E-ATF (pour « Enhanced Accident Tolerant Fuel » en anglais) destinés à des réacteurs nucléaires à eau légère tels que les réacteurs à eau pressurisée (ou REP) et les réacteurs à eau bouillante (ou REB), mais également pour le gainage d'autres types de combustibles nucléaires dès lors que ce gainage répond à une conception tubulaire multicouche avec une couche à base d'une céramique dont la face interne est associée à une couche métallique.

Aussi, l'invention a-t-elle aussi pour objet un procédé de fabrication d'une gaine tubulaire d'un combustible nucléaire mettant en oeuvre le procédé de métallisation.

Toutefois, le procédé de métallisation de l'invention est également susceptible d'être mis en oeuvre dans d'autres domaines industriels tels que dans la fabrication de réservoirs tubulaires destinés à contenir des produits à forte valeur ajoutée (comme de l'hydrogène liquide ou solide, des combustibles solides de type ergol, etc.) et, plus généralement, dans la fabrication d'éléments tubulaires devant comprendre une couche à base d'une céramique dont la face interne est associée à une couche métallique (comme le chemisage).

**ÉTAT DE LA TECHNIQUE ANTÉRIEURE**

Suite à l'accident nucléaire de Fukushima-Daiichi en 2011, de nombreux programmes de recherche nationaux et internationaux ont été lancés sur la conception et le développement de nouveaux concepts d'éléments de combustibles nucléaires, dits E-ATF, plus robustes en situations accidentelles que les éléments de combustibles nucléaires actuels.

Ces programmes de recherche portent en particulier sur de nouvelles solutions de gainage des combustibles nucléaires sachant que les propriétés attendues pour un matériau de gainage sont notamment (mais pas seulement) une étanchéité propre à garantir un confinement de la matière fissile et des produits de fission en toutes circonstances (normales, incidentelles ou accidentelles) et une capacité à évacuer vers le fluide caloporteur la chaleur produite par les réactions nucléaires, là également en toutes circonstances.

Une des solutions de gainage actuellement à l'étude est fondée sur l'utilisation de matériaux composites à matrice et fibres en carbure de silicium, plus simplement appelés $SiC_f/SiC$. Ces matériaux présentent, en effet, une attractivité élevée notamment en raison de leurs performances remarquables en termes de tenue à l'oxydation sous air, de résistance mécanique et de stabilité dimensionnelle jusqu'à de très hautes températures (c'est-à-dire, même au-delà de 1 600 °C), ce qui laisse entrevoir la possibilité d'augmenter significativement, en situations accidentelles, les marges de sûreté à la fusion et, par là même, les délais d'intervention pour sécuriser le coeur des réacteurs.

Cependant, en dépit de cette attractivité, l'intégration en réacteur d'éléments combustibles à gaines céramiques $SiC_f/SiC$ n'est pas attendue avant de nombreuses années car des verrous technologiques importants doivent encore être levés. L'un de ces verrous concerne l'incapacité d'une céramique à conserver une étanchéité - ou, à tout le moins, l'incapacité de pouvoir démontrer cette propriété - vis-à-vis du fluide caloporteur mais également vis-à-vis de la matière fissile et des produits de fission, en toutes circonstances et tout au long de sa vie.

Aussi, pour éviter cette perte d'étanchéité, deux conceptions de gaine multicouche ont été envisagées dans lesquelles une couche en un composite $SiC_f/SiC$, propre à assurer la robustesse de la gaine en conditions accidentelles, est associée à une couche qui est soit en SiC monolithique soit métallique et qui, elle, est destinée à garantir le confinement de la matière fissile et l'herméticité aux produits de fission en toutes circonstances.

Dans le cas d'une gaine « toute céramique », la couche en SiC monolithique sur laquelle repose la fonction d'étanchéité est généralement élaborée *in situ* en même temps que la couche en composite $SiC_f/SiC$ par un procédé en voie gazeuse, voire par frittage d'une poudre. Si cette conception conduit à un continuum de matière favorable à un transfert thermique, l'expérience montre que la gaine ainsi obtenue est fragile et perd son étanchéité par microfissuration dès lors que la céramique atteint sa limite d'élasticité qui est de l'ordre de 0,1 % sous sollicitation de service ou accidentelle.

C'est la raison pour laquelle il a été décidé par le Commissariat à l'énergie atomique et aux énergies alternatives (CEA), auquel appartiennent les inventeurs, de privilégier une gaine hybride « composite/métal » qui permet d'entrevoir des niveaux de déformation supérieurs à 1 % avec un maintien de l'étanchéité.

Lors de la fabrication d'une telle gaine, il convient que le procédé mis en oeuvre pour associer les deux couches, respectivement en composite $SiC_f/SiC$ et métallique, conduise à une cohésion entre ces couches, cette cohésion étant garante d'un transfert de chaleur optimal. En effet, les conséquences négatives d'une absence de cohésion sont connues de la littérature (cf. L. Duquesne, Caractérisation thermique de structures composites SiC/SiC tubulaires pour applications nucléaires. Génie des procédés. École nationale supérieure d'arts et métiers - ENSAM, 2015, ci-après référence [1]).

Actuellement, en l'absence d'alternative probante, le procédé expérimental de référence au CEA pour la réalisation d'une gaine E-ATF « composite/métal », dans laquelle la couche métallique se situe sur la face interne de la couche en composite SiC$_f$/SiC, est le procédé d'emmanchement « poussant » avec une tolérance glissante. Ce procédé vise à associer deux composants tubulaires unitaires préparés au préalable avec un jeu radial ajusté (< 50 $\mu$m) sous l'effet d'un effort axial (données non publiées).

Un procédé qui consisterait à infiltrer pendant plusieurs centaines d'heures une préforme fibreuse par voie gazeuse de type CVI (de « Chemical Vapor Infiltration ») directement sur un substrat métallique ne convient pas. En effet, ces conditions d'infiltration, qui mettent en oeuvre des précurseurs chlorés entraînés par le dihydrogène utilisé comme gaz porteur dans un four chauffé à 1000 °C, sont applicables aux métaux réfractaires comme le tantale ou le niobium qui sont susceptibles d'être utilisés pour la fabrication de gaines de combustibles destinés à des réacteurs fonctionnant avec un caloporteur autre que l'eau (réacteurs à neutrons rapides refroidis à l'hélium par exemple) mais sont rédhibitoires dans le cas des matériaux métalliques actuellement retenus pour la fabrication de gaines E-ATF « composite/métal » et destinées à des réacteurs nucléaires à eau légère tels que les alliages de zirconium et le titane.

Enfin, un procédé d'association par hydroformage, consistant à déformer plastiquement un tube métallique sous l'action d'un fluide sous pression, typiquement une émulsion eau-huile, à température ambiante pour venir le plaquer contre la face interne d'un tube en composite SiC$_f$/SiC, a été abandonné très vite.

En effet, outre le fait que ce procédé s'accompagne d'un retour élastique inévitable du métal ou de l'alliage métallique s'opposant à l'instauration d'une cohésion entre les deux couches, il exige des conditions de pression très élevées de nature à endommager de manière irréversible la couche en composite.

Compte-tenu de ce qui précède, les inventeurs se sont fixé pour but de fournir un procédé qui permette de métalliser la face interne d'un tube à base d'une céramique et, notamment, d'un tube en un composite du type SiC$_f$/SiC pour la réalisation d'une gaine E-ATF « composite/métal » et qui soit, d'une manière générale, exempt de tous les inconvénients présentés par les procédés proposés jusqu'à présent pour associer une couche métallique à la face interne d'un tube à base d'une céramique.

## EXPOSÉ DE L'INVENTION

L'invention vise justement à fournir un tel procédé.

Ainsi, l'invention a, en premier lieu, pour objet un procédé de métallisation de la face interne d'un tube en une céramique ou en un composite à matrice céramique, qui comprend au moins une étape de placage d'un tube métallique sur la face interne du tube en céramique ou composite à matrice céramique, et qui est caractérisé en ce que le placage comprend un fluage du tube métallique par application à ce tube d'une pression interne et d'un chauffage, le fluage se traduisant par une augmentation du diamètre externe du tube métallique jusqu'à ce que la face externe de ce tube se plaque sur la face interne du tube en céramique ou composite à matrice céramique.

Dans ce qui précède et ce qui suit, on entend par « tube métallique », un tube constitué d'un métal ou d'un alliage métallique tandis que l'on entend par « composite à matrice céramique », un matériau composé d'une céramique renforcée par un renfort fibreux, ce renfort pouvant notamment être, lui-même, constitué de fibres en céramique.

Par ailleurs, nous rappelons que le fluage correspond à une déformation irréversible d'un matériau sous l'effet d'une contrainte constante qui lui est appliquée pendant une durée suffisante pour obtenir cette déformation.

Ainsi, dans le procédé de l'invention, le fluage permet au tube métallique de se déformer radialement jusqu'à ce que sa face externe vienne se plaquer sur la face interne du tube en céramique ou composite à matrice céramique, et ce, de manière irréversible en sorte que tout retour élastique du métal ou alliage métallique constituant le tube métallique est impossible. Une structure bicouche, caractérisée par une cohésion entre la couche métallique et la couche en céramique ou composite à matrice céramique, est ainsi obtenue avec à la clé, un transfert thermique optimal.

Comme précédemment indiqué, le placage par fluage du tube métallique comprend l'application à ce tube d'une pression interne et d'un chauffage.

De préférence, la pression interne est appliquée au tube métallique de façon uniforme par une mise sous pression isostatique de ce tube, c'est-à-dire égale dans toutes les directions de sorte que le fluage du tube métallique soit le même en tout point de ce tube.

Typiquement, cette mise sous pression isostatique est réalisée par une admission d'un gaz, lequel est, de préférence, un gaz inerte tel que l'hélium ou l'argon pour éviter tout risque de réaction ou d'interaction avec le métal ou l'alliage métallique qui constitue le tube métallique mais d'autres gaz peuvent également convenir selon la nature de ce métal ou de cet alliage métallique et la finalité recherchée pour la structure tubulaire obtenue après la métallisation.

Concernant le chauffage du tube métallique, celui-ci est avantageusement réalisé par effet Joule, cet effet pouvant être induit par circulation d'un courant électrique dans le tube métallique-ce qui permet un échauffement rapide du tube métallique et un contrôle précis de la température à laquelle il est porté - ou bien par induction électromagnétique, par couplage direct avec le tube métallique.

Il est également possible de soumettre le tube métallique à une pré-pressurisation puis de chauffer dans un four l'ensemble formé par ce tube et le tube en céramique ou en composite à matrice céramique, le tube métallique étant alors fermé à ses deux extrémités.

De préférence, les conditions de pression et de température à appliquer au tube métallique pour obtenir son fluage ainsi que la durée d'application de ces conditions seront choisies de sorte à ce qu'elles permettent de déformer radialement ce tube suffisamment pour que sa face externe vienne se plaquer contre la face interne du tube en céramique ou composite à matrice céramique et assurer, ainsi, une cohésion entre les deux faces mais :

- d'une part, sans modifier la structure cristalline et la texture cristallographique du métal ou de l'alliage métallique qui constitue le tube métallique (ainsi, une température trop élevée peut conduire à un grossissement des grains du métal ou de l'alliage métallique), et
- d'autre part, sans endommager le tube en céramique ou composite à matrice céramique, ce qui signifie que la contrainte radiale induite par le niveau de pression appliqué au tube métallique ne doit pas dépasser le seuil d'endommagement de la céramique ou du composite à matrice céramique, ce seuil correspondant sensiblement à la limite d'élasticité de la céramique ou du composite à matrice céramique.

Ces conditions seront donc choisies en fonction des propriétés du métal ou de l'alliage métallique constituant le tube métallique et de celles de la céramique ou du composite constituant le tube en céramique ou composite à matrice céramique mais également en fonction de la géométrie de ces tubes et, notamment, de l'épaisseur de la paroi du tube métallique ainsi que de l'espace, ou jeu radial, existant initialement entre la face externe du tube métallique et la face interne du tube en céramique ou composite à matrice céramique et devant être comblé par le placage.

À cet égard, on précise que les conditions de température et de pression à appliquer au tube métallique ainsi que la durée d'application de ces conditions peuvent être déterminées de manière théorique au moyen d'une loi de fluage telle que celle décrite par T. Forgeron et al. (Experiment and Modelling of Advanced Fuel Rod Cladding Behavior Under LOCA Conditions : Alpha-Beta Phase Transformation Kinetics and EDGAR Methodology, Zirconium in the Nuclear Industry : Twelfth International Symposium, ASTM STP, 2000, 1354, 256-278 ; ci-après référence [2]), puis vérifiées ou, si besoin, affinées expérimentalement en soumettant à des essais de fluage, au moyen d'un banc de fluage, des éprouvettes représentatives des deux tubes que l'on souhaite associer.

Dans le cadre de l'invention, le tube métallique est, de préférence, en zirconium, en titane ou en un alliage de ceux-ci, préférence étant toutefois donnée à un alliage de zirconium.

Dans le cas où le tube métallique est en un alliage de zirconium, la température à laquelle est porté ce tube est avantageusement comprise entre $0,25 T_f$ et $0,5 T_f$ et, de préférence, entre $0,4 T_f$ et $0,5 T_f$, $T_f$ étant la température absolue de fusion de l'alliage en zirconium constituant ce tube. Par ailleurs, comme précisé précédemment, la pression appliquée au tube en alliage de zirconium est convenablement choisie de sorte que la contrainte radiale induite par cette pression soit suffisante pour déformer radialement ce tube tout en étant inférieure à la limite d'élasticité de la céramique ou du composite à matrice céramique.

Des exemples d'un tel alliage de zirconium peut être le Zircaloy-4, le Zirlo™ ou encore l'alliage M5™, ces alliages présentent de nombreux avantages pour une application du procédé de métallisation de l'invention au gainage de combustibles nucléaires destinés à des réacteurs nucléaires à eau légère, tels qu'une très faible absorption des neutrons thermiques, des propriétés mécaniques satisfaisantes et une très bonne résistance à la corrosion même en conditions de hautes températures.

Toutefois, il est envisageable de prévoir que le tube métallique puisse être en un métal ou alliage métallique autre que ceux précités tel qu'un acier, un alliage à base de nickel, un alliage de type fer-chrome-aluminium, un alliage à haute entropie constitué de plusieurs éléments métalliques en proportion équimolaire et, plus généralement, tout métal ou alliage métallique susceptible de se déformer par fluage et étant compatible d'un point de vue thermochimique avec la céramique du tube sur la face interne duquel le tube métallique doit être plaqué.

Conformément à l'invention, le tube en céramique ou composite à matrice céramique est, de préférence, soit un tube constitué de SiC s'il est en céramique soit un tube en SiC renforcé par des fibres céramiques s'il est en composite à matrice céramique, ces fibres céramiques pouvant notamment être des fibres de carbone, des fibres de SiC ou des fibres oxydes, toute préférence étant données à des fibres de SiC.

Des exemples de fibres de SiC susceptibles d'être utilisées sont notamment les fibres Nicalon™, Hi-Nicalon™ et Hi-Nicalon™ type S produites par la société NGS Advanced Fibers ou encore les fibres Tyranno™, Tyranno™ SA, Tyranno™ SA3 ou Tyranno™ SA4 produites par la société UBE Industries, Ltd.

Parmi celles-ci, toute préférence est donnée aux fibres Hi-Nicalon™ type S et Tyranno™ SA3 et Tyranno™ SA4 en raison de leur pureté, de leur cristallinité et de leur composition quasi stoechiométrique (ratio $Si/C \approx 1$) qui leur confèrent une stabilité toute particulière sous irradiation neutronique.

Par ailleurs, comme connu en soi, les fibres du renfort peuvent être revêtues d'un matériau d'interphase, avantageusement du carbone pyrolytique, dont le rôle principal est d'assurer un transfert de charge accommodant sous sollicitations mécaniques et d'éviter que ne se produisent des ruptures brutales au-delà du domaine élastique de la matrice en SiC.

Conformément à l'invention, le procédé comprend avantageusement de plus, avant l'étape du placage, l'insertion du tube métallique dans le tube en céramique ou composite à matrice céramique. Cette insertion peut être réalisée, par exemple, en faisant simplement glisser le tube métallique dans le tube en céramique ou composite à matrice céramique. Il va de soi que le tube métallique a un diamètre externe inférieur au diamètre interne du tube en céramique ou composite à matrice céramique, ce qui permet cette insertion.

Le procédé de métallisation de l'invention s'est révélé particulièrement être bien adapté à la fabrication de gaines tubulaires de combustibles nucléaires en raison de ce qu'il offre la possibilité de plaquer un tube métallique, en particulier en un alliage de zirconium, sur la face interne d'un tube en composite à matrice céramique, notamment à base de SiC, et ce, d'une part, sans risque d'un quelconque retour élastique du tube métallique et, d'autre part, sans recourir à des opérations du type passage en four CVI de nature à dégrader les propriétés de la couche métallique.

Aussi, l'invention a-t-elle également pour objet un procédé de fabrication d'une gaine tubulaire d'un combustible nucléaire, cette gaine comprenant une couche en un composite à matrice céramique dont la face interne est revêtue d'une couche métallique, qui est caractérisé en ce qu'il comprend au moins la mise en oeuvre du procédé de métallisation tel que précédemment défini.

De préférence, la gaine est une gaine bicouche, c'est-à-dire que la couche composite à matrice céramique forme la face externe de la gaine tandis que la couche métallique forme la face interne de la gaine.

Toutefois, il va de soi que la gaine peut être autre que bicouche avec la présence d'une ou plusieurs couches additionnelles soit sur la face externe de la couche en composite à matrice céramique soit sur la face interne de la couche métallique.

Typiquement, la gaine tubulaire est à section circulaire mais d'autres géométries sont également possibles telles qu'une section ovale, rectangulaire, carrée ou hexagonale.

De préférence, la couche en composite à matrice céramique de la gaine est une couche à matrice en carbure de silicium et fibres de carbure de silicium tandis que la couche métallique de cette gaine est une couche en un alliage de zirconium tel que le Zircaloy-4, le Zirlo™ ou l'alliage M5™.

Conformément à l'invention, la gaine est, de préférence, une gaine d'un combustible nucléaire pour réacteur nucléaire à eau légère et, notamment, pour réacteur à eau pressurisée ou réacteur à eau bouillante, de préférence pour réacteur à eau pressurisée, auquel cas la gaine présente typiquement une longueur de 4 mètres, une paroi d'une épaisseur de 600 $\mu$m, la couche à matrice en carbure de silicium et fibres de carbure de silicium présentant alors, de préférence, une épaisseur de 400 $\mu$m à 500 $\mu$m tandis que la couche métallique présente, elle, préférentiellement une épaisseur de 100 $\mu$m à 200 $\mu$m.

Le procédé de métallisation de l'invention est également bien adapté à la fabrication de réservoirs tubulaires à gaz liquide ou solide, par exemple d'hydrogène, ou à ergol, dont la paroi comprend une couche en une céramique ou un composite à matrice céramique dont la face interne est revêtue d'une couche métallique.

Aussi, l'invention a-t-elle également pour objet un procédé de fabrication d'un tel réservoir, qui est caractérisé en ce qu'il comprend au moins la mise en oeuvre du procédé de métallisation tel que précédemment défini.

De préférence, la paroi du réservoir est une paroi bicouche, c'est-à-dire que la couche en céramique ou composite à matrice céramique forme la face externe du réservoir et la couche métallique forme la face interne du réservoir.

D'autres caractéristiques et avantages de l'invention ressortiront du complément de description qui suit et qui est donné en référence aux figures annexées.

Il va de soi que ce complément de description n'est donné qu'à titre d'illustration de l'objet de l'invention et ne doit en aucun cas être interprété comme une limitation de cet objet.

## BRÈVE DESCRIPTION DES FIGURES

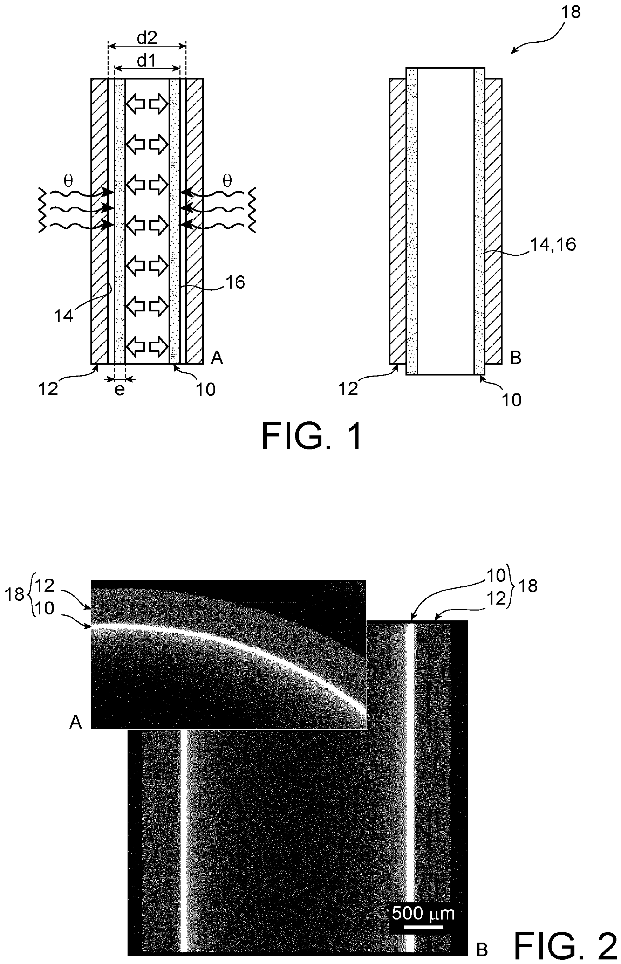

La figure 1 est une représentation schématique du principe du placage par fluage mis en oeuvre dans le procédé de l'invention, la partie A montrant, vus en coupe longitudinale, un tube métallique dans un tube en céramique ou composite à matrice céramique avant que le tube métallique ne soit déformé par fluage tandis que la partie B montre la structure tubulaire bicouche obtenue après déformation par fluage du tube métallique ; sur cette figure, les dimensions et proportions relatives des tubes ne sont pas représentatives de celles susceptibles d'être présentées par les tubes en situation réelle de mise en oeuvre du procédé de l'invention, et ce, pour des questions de lisibilité.
La figure 2, parties A et B, correspond à deux images prises par tomographie d'une structure tubulaire bicouche telle qu'illustrée sur la partie B de la figure 1, la partie A montrant un segment de la structure vu en coupe transversale tandis que la partie B montre un segment de la structure vu en coupe longitudinale.

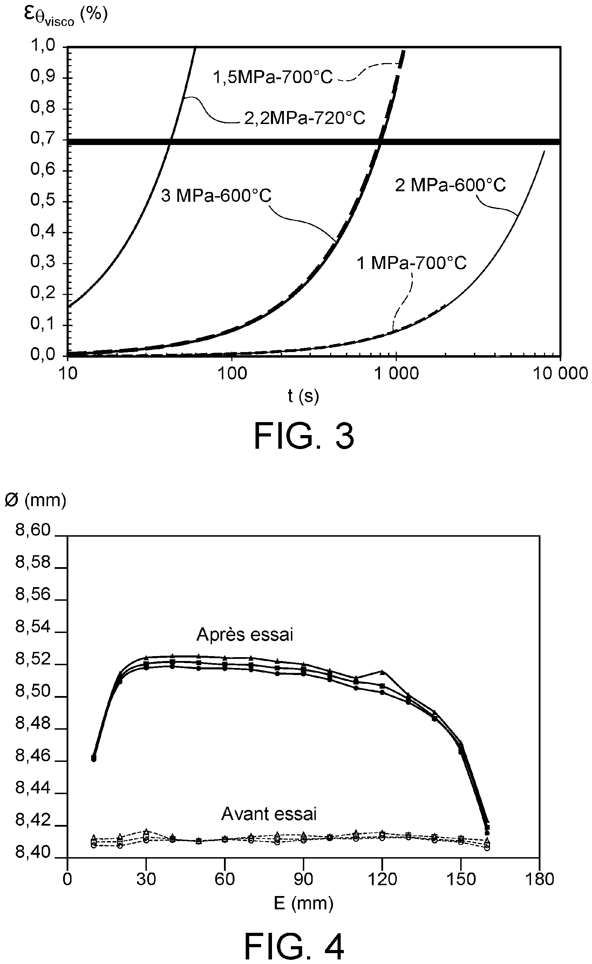

La figure3 illustre les résultats d'une recherche paramétrique sur les conditions de fluage susceptibles de permettre une déformation radiale de 0,70 % par fluage d'une éprouvette en Zircaloy-4 dans une éprouvette en composite SiC$_f$/SiC de sorte à combler l'espace radial existant initialement entre ces éprouvettes; sur cette figure, l'axe des ordonnées correspond au pourcentage de déformation circonférentielle, notée $\varepsilon_{\theta_{visco}}$, de l'éprouvette en Zircaloy-4 tandis que l'axe des abscisses correspond à la durée d'application, notée t et exprimée en secondes, des conditions de pression et de température.

La figure 4 illustre les résultats d'un contrôle métrologique par profilométrie visant à apprécier la déformation radiale d'éprouvettes tubulaires en Zircaloy-4 avant et après des essais de fluage réalisés sur ces éprouvettes seules; sur cette figure, l'axe des ordonnées correspond au diamètre externe des éprouvettes, noté Ø et exprimé en mm, tandis que l'axe des abscisses correspond à l'étendue longitudinale de la déformation radiale, notée E et exprimée en mm, de ces éprouvettes.

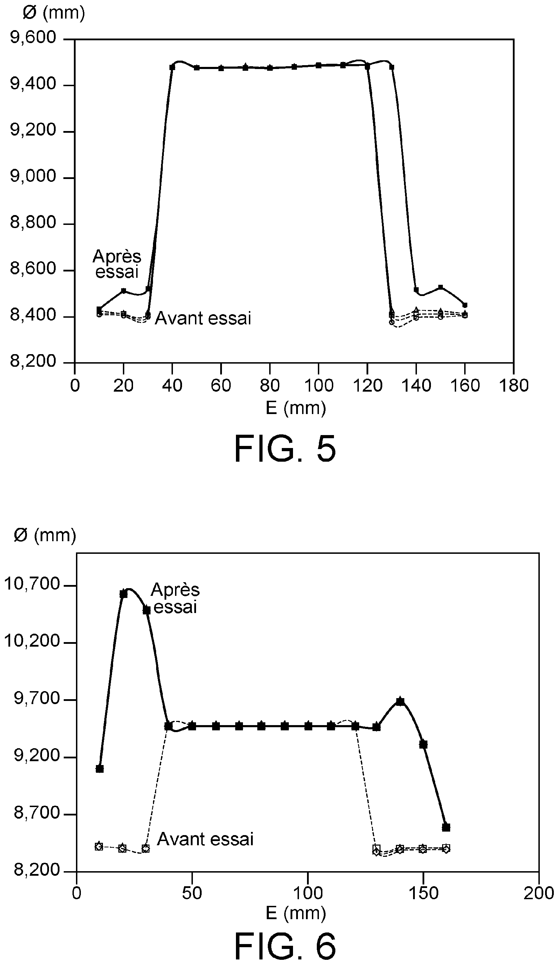

La figure 5 illustre les résultats d'un contrôle métrologique par profilométrie visant à apprécier, avant et après une première série d'essais de fluage, la déformation radiale d'éprouvettes tubulaires en Zircaloy-4 dans des éprouvettes tubulaires en composite SiC$_f$/SiC ; sur cette figure, l'axe des ordonnées correspond au diamètre externe, noté Ø et exprimé en mm, des éprouvettes en Zircaloy-4 tandis que l'axe des abscisses correspond à l'étendue longitudinale de la déformation radiale, notée E et exprimée en mm, de ces éprouvettes.

La figure 6 est une figure analogue à la figure 5 mais pour une deuxième série d'essais de fluage réalisés avec des conditions de fluage différentes.

## DESCRIPTION DETAILLEE DE MODES DE MISE EN OEUVRE PARTICULIERS

### I - **Principe du placage par fluage** :

On se réfère tout d'abord à la figure 1 qui illustre schématiquement le principe du placage par fluage d'un tube 10 en un métal ou en un alliage métallique sur la face interne 14 d'un tube 12 en une céramique ou un en composite à matrice céramique, les tubes 10 et 12 étant vus sur cette figure en coupe longitudinale.

Comme montré par la partie A de la figure 1, le tube 10, de diamètre externe *d1,* est préalablement inséré dans le tube 12, de diamètre interne *d2* supérieur à *d1,* le jeu existant entre *d1* et *d2* étant, de préférence, choisi de sorte que, tout en permettant d'insérer par glissement le tube 10 dans le tube 12, il puisse ensuite être aisément comblé par fluage du tube 10. Aussi, ce jeu est-il, de préférence, compris entre une dizaine de micromètres et un millimètre.

Le fluage du tube 10 est obtenu sous l'effet de l'application, sur la face interne du tube 10, d'une pression, de préférence isostatique comme symbolisée par les flèches blanches rectilignes, pour que cette pression et, par conséquent, le fluage soient les mêmes en tout point de ce tube. L'application de cette pression est associée à un chauffage du tube 10, symbolisé, lui, par les flèches noires ondulées surmontées de θ.

Par fluage, le tube 10 se déforme radialement en sorte que son diamètre externe *d1* augmente conduisant ainsi sa face externe 16 à se plaquer sur la face interne 14 du tube 12, et ce, de manière irréversible, c'est-à-dire sans retour élastique possible du métal ou de l'alliage métallique constituant le tube 10. Comme montré par la partie B de la figure 1, une structure tubulaire bicouche 18 est ainsi obtenue. Cette structure est caractérisée par une cohésion entre la couche métallique et la couche en céramique ou composite à matrice céramique comme le montrent les images de tomographie de la figure 2.

Le fluage se traduit par un écoulement du métal ou de l'alliage métallique et, par la même, par un amincissement de l'épaisseur *e* de la paroi du tube 10 doublé d'un allongement de ce tube comme également montré par la partie B de la figure 1.

### II - **Application expérimentale du placage par fluage** :

Les données rapportées ci-après sont obtenues pour des éprouvettes tubulaires en Zircaloy-4 et des éprouvettes tubulaires en un composite SiC$_f$/SiC ayant été préparées dans le cadre d'un programme E-ATF.

Les dimensions de ces éprouvettes sont présentées dans le tableau ci-après.

| Composants | ∅ **interne** (mm) | ∅ **externe** (mm) | **L** (mm) | **Jeu radial à combler** (mm) |
|---|---|---|---|---|
| Zircaloy-4 | 7,96$^{+0,02/-0,01}$ | 8,40$^{+0,05/-0,01}$ | 170$^{\pm 1}$ | < 0,030 |
| SiC$_f$/SiC | 8,45$^{\pm 0,05}$ | 9,49$^{\pm 0,005}$ | 97$^{+1}$ | |

**11.1 - Sélection des conditions de fluage :**

Les conditions de fluage susceptibles de convenir pour obtenir une cohésion entre la face externe d'une éprouvette en Zircaloy-4 et la face interne d'une éprouvette en composite SiC$_f$/SiC sont déterminées à l'aide de la loi de fluage décrite dans la référence [2], de formule :

$$\dot{\varepsilon}^i_{\theta_{visco}} = A_i \sigma_\theta^{n_i} exp\left(-\frac{Q_i}{k_B T}\right)$$

dans laquelle :

$\dot{\varepsilon}^i_{\theta_{visco}}$ représente la vitesse de déformation circonférentielle en considérant un écoulement viscoplastique iso-chore,

$\sigma_\theta$ représente la contrainte circonférentielle,

T représente la température absolue,

$k_B$ représente la constante de Boltzmann,

$A_i$ , $Q_i$ et $n_i$ sont des coefficients de la loi de fluage déterminés expérimentalement pour un matériau donné,

$i$ représente le domaine de transformation de phase ($i = \alpha, \beta$).

La contrainte circonférentielle est reliée à la déformation circonférentielle viscoplastique $\varepsilon_{\theta_{visco}}$ selon la relation suivante :

$$\sigma_\theta = \frac{\Delta p D_{m_0}}{2e_0}(1 + \varepsilon_{\theta_{visco}})^2$$

dans laquelle :

$\sigma_\theta$ est tel que précédemment défini ;

$\Delta p$ représente le différentiel de pression appliqué à l'éprouvette en Zircaloy-4 ;

$D_{m_0}$ représente le diamètre moyen initial de l'éprouvette en Zircaloy-4 ;

$e_0$ représente l'épaisseur initiale de la paroi de l'éprouvette en Zircaloy-4.

Dans l'application de cette loi, les conditions de température et de pression sont présumées être appliquées de manière uniforme sur les éprouvettes en Zircaloy-4.

Par ailleurs, il est pris comme postulat que la déformation circonférentielle à imposer aux éprouvettes en Zircaloy-4 doit être de 0,70 % pour les géométries considérées de sorte à combler le jeu radial initialement présent entre les éprouvettes en Zircaloy-4 et les éprouvettes en composite SiC$_f$/SiC.

La figure 3 illustre sous la forme de courbes exprimant le pourcentage de déformation circonférentielle, notée $\varepsilon_{\theta_{visco}}$, en fonction du temps, noté t et exprimée en secondes, les résultats obtenus pour cinq couples pression/température différents, à savoir :

- une pression de 1 MPa associée à une température de 700 °C,
- une pression de 1,5 MPa associée à une température de 700 °C,
- une pression de 2 MPa associée à une température de 600 °C,
- une pression de 2,2 MPa associée à une température de 720 °C, et
- une pression de 3 MPa associée à une température de 600 °C.

Comme le montre cette figure, trois couples pression/température permettent d'obtenir une déformation circonférentielle de 0,70 % en moins de 1 000 secondes, à savoir : le couple 2,2 MPa/720 °C pour lequel la déformation est obtenue en 42 secondes et les couples 3 MPa/600 °C et 1,5 MPa/700 °C pour lesquels la déformation est obtenue en 800 secondes.

Toutefois, il ressort d'essais de traction uniaxiale que l'application d'une pression de 3 MPa revient à imposer aux éprouvettes en composite SiC$_f$/SiC une contrainte radiale de 56 MPa, c'est-à-dire supérieure à la limite d'élasticité du composite et, donc, susceptible d'endommager ce dernier.

Par contre, l'application d'une pression de 1,5 MPa ou de 2,2 MPa revient à imposer aux éprouvettes en composite SiC$_f$/SiC une contrainte radiale respectivement de 28 MPa et de 41 MPa, c'est-à-dire inférieure à la limite d'élasticité du composite et, donc, propre à éviter tout endommagement de celui-ci.

Ce sont donc des conditions de fluage utilisant une pression de 1,5 MPa d'une part, et de 2,2 MPa d'autre part, qui sont testées ci-après.

**II.2** - **Essais de fluage sur des éprouvettes en Zircaloy-4 seules** :

Des éprouvettes en Zircaloy-4 sont soumises seules, c'est-à-dire sans la présence d'éprouvettes en composite SiC$_f$/SiC, à des essais de fluage en leur appliquant une pression de 1,5 MPa et une température de 700 °C pendant 800 secondes afin de valider expérimentalement ces conditions.

Ces essais sont réalisés au moyen d'un banc de fluage, tel que décrit dans la référence [2], qui est adapté à la préhension de tubes métalliques. La pression est appliquée de manière uniforme sur la face interne des éprouvettes par admission d'un gaz inerte tandis que les éprouvettes sont chauffées par effet Joule. Les éprouvettes sont disposées dans une enceinte permettant de travailler sous une atmosphère pilotée. La température est mesurée sur la face externe des éprouvettes par un pyromètre bichromatique, ainsi qu'à l'intérieur des éprouvettes à l'aide d'un thermocouple.

Un contrôle métrologique par profilométrie des éprouvettes est réalisé avant et après les essais de fluage.

Les résultats de ce contrôle sont illustrés sur la figure 4, les profils en pointillés correspondant aux variations, respectivement minimales, moyennes et maximales, du diamètre externe, noté Ø et exprimé en mm, des éprouvettes avant les essais de fluage tandis que les profils en traits pleins correspondent aux variations, respectivement minimales, moyennes et maximales, de ce même diamètre à l'issue des essais de fluage.

Cette figure montre qu'à l'issue des essais de fluage, une augmentation moyenne de 1,2 % du diamètre externe des éprouvettes en Zircaloy-4 est obtenue de façon homogène sur une étendue longitudinale d'environ 120 mm, cette étendue correspondant à la partie, dite « partie utile », des éprouvettes en Zircaloy-4 devant être associée à la paroi interne des éprouvettes en composite SiC$_f$/SiC (voir les longueurs respectives des éprouvettes en Zircaloy-4 et des éprouvettes en composite SiC$_f$/SiC présentées dans le tableau ci-avant).

**II.3** - **Essais de fluage sur des éprouvettes en Zircaloy-4 dans des éprouvettes en composite SiC$_f$/SiC** :

On réalise des essais de fluage similaires à ceux décrits au point II.2 ci-avant à ceci près que ces essais sont réalisés sur des éprouvettes en Zircaloy-4 insérées dans des éprouvettes en composite SiC$_f$/SiC.

Deux séries d'essais sont réalisées :

- une première série en appliquant aux éprouvettes en Zircaloy-4 une pression de 1,5 MPa associée à une température de 700 °C pendant 800 secondes, et
- une deuxième série d'essais en appliquant aux éprouvettes en Zircaloy-4 une pression de 2,2 MPa associée à une température de 720 °C pendant 1 600 secondes ; en effet, bien que la figure 3 montre que pour ce couple pression/température, 42 secondes suffisent à obtenir la déformation radiale recherchée, une durée plus longue est utilisée dans la deuxième série d'essais par mesure de confort.

Là également, un contrôle métrologique par profilométrie des éprouvettes est réalisé avant et après les essais de fluage.

**Première série d'essais (1,5 MPa/700 °C/800 s) :**

Les résultats du contrôle métrologique réalisé dans cette première série d'essais sont illustrés sur la figure 5, dans laquelle les profils en pointillés correspondent aux variations, respectivement minimales, moyennes et maximales, du diamètre externe, noté Ø et exprimé en mm, des éprouvettes en Zircaloy-4 avant les essais de fluage tandis que les profils en traits pleins correspondent aux variations moyennes de ce même diamètre à l'issue des essais de fluage. Sur cette figure, les variations du diamètre externe des éprouvettes en Zircaloy-4 sont présentées pour toute la longueur de ces éprouvettes incluant leur partie utile.

Cette figure montre qu'à l'issue des essais de fluage, une déformation radiale de 0,97 % des éprouvettes en Zircaloy-4 est obtenue pour les parties de ces éprouvettes qui ne sont pas recouvertes par une éprouvette en composite SiC$_f$/SiC, ce qui laisse supposer qu'un plaquage par fluage des éprouvettes en Zircaloy-4 au niveau de leur partie utile s'est bien opéré.

La figure 5 montre également que la déformation radiale par fluage des éprouvettes en Zircaloy-4 n'a pas, dans les conditions de fluage retenues, d'incidence sur les éprouvettes en composite SiC$_f$/SiC, le diamètre externe de ces dernières étant le même avant et après les essais de fluage.

**Deuxième série d'essais (2,2 MPa/720 °C/1 600 s) :**

Les résultats du contrôle métrologique réalisé dans cette deuxième série d'essais sont, eux, illustrés sur la figure 6, dans laquelle, là également, les profils en pointillés correspondent aux variations, respectivement minimales, moyennes et maximales, du diamètre externe Ø des éprouvettes en Zircaloy-4 avant les essais de fluage tandis que les profils en traits pleins correspondent aux variations moyennes de ce même diamètre à l'issue des essais de fluage.
Cette figure montre qu'à l'issue des essais de fluage, une déformation radiale allant jusqu'à 27 % des éprouvettes en Zircaloy-4 est obtenue pour les parties de ces éprouvettes qui ne sont pas recouvertes par une éprouvette en composite $SiC_f$/SiC, ce qui, là également, laisse supposer qu'un plaquage par fluage des éprouvettes en Zircaloy-4 au niveau de leur partie utile s'est bien opéré.

## RÉFÉRENCES CITÉES

[1] L. Duquesne, Caractérisation thermique de structures composites SiC/SiC tubulaires pour applications nucléaires. Génie des procédés. École nationale supérieure d'arts et métiers - ENSAM, 2015
[2] T. Forgeron, et al., Experiment and Modelling of Advanced Fuel Rod Cladding Behavior Under LOCA Conditions: Alpha-Beta Phase Transformation Kinetics and EDGAR Methodology, Zirconium in the Nuclear Industry : Twelfth International Symposium, ASTM STP, 2000, 1354, 256-278

## Revendications

1. Procédé de métallisation de la face interne (14) d'un tube (12) en une céramique ou en un composite à matrice céramique, qui comprend au moins une étape de placage d'un tube métallique (10) sur la face interne (14) du tube (12) en céramique ou composite à matrice céramique, **caractérisé en ce que** le placage comprend un fluage du tube métallique (10) par application à ce tube d'une pression interne et d'un chauffage, le fluage se traduisant par une augmentation du diamètre externe (d1) du tube métallique (10) jusqu'à ce que la face externe (16) de ce tube se plaque sur la face interne (14) du tube (12) en céramique ou composite à matrice céramique.

2. Procédé de métallisation selon la revendication 1, dans lequel l'application d'une pression interne au tube métallique comprend une mise sous pression isostatique de ce tube.

3. Procédé de métallisation selon la revendication 2, dans lequel la mise sous pression isostatique comprend l'admission d'un gaz, de préférence inerte.

4. Procédé de métallisation selon l'une quelconque des revendications 1 à 3, dans lequel le chauffage du tube métallique est réalisé par effet joule.

5. Procédé de métallisation selon l'une quelconque des revendications 1 à 4, dans lequel le tube métallique est en zirconium, en titane ou en un alliage de ceux-ci, préférence étant donnée à un alliage de zirconium.

6. Procédé de métallisation selon l'une quelconque des revendications 1 à 5, dans lequel le tube en céramique ou composite à matrice céramique est un tube en carbure de silicium ou en un composite à matrice de carbure de silicium et renfort fibreux.

7. Procédé de métallisation selon la revendication 6, dans lequel le renfort fibreux comprend des fibres de carbone, des fibres de carbure de silicium ou des fibres oxydes, de préférence des fibres de carbure de silicium.

8. Procédé de métallisation selon l'une quelconque des revendications 1 à 7, qui comprend de plus, avant l'étape de placage, l'insertion du tube métallique dans le tube en céramique ou composite à matrice céramique.

9. Procédé de fabrication d'une gaine tubulaire d'un combustible nucléaire, la gaine comprenant une couche en un composite à matrice céramique dont la face interne est revêtue d'une couche métallique, **caractérisé en ce qu'**il comprend au moins la mise en oeuvre du procédé de métallisation selon l'une quelconque des revendications 1 à 8.

10. Procédé de fabrication selon la revendication 9, dans lequel la couche en composite à matrice céramique forme la face externe de la gaine et la couche métallique forme la face interne de la gaine.

11. Procédé de fabrication selon la revendication 9 ou la revendication 10, dans lequel la couche en composite à matrice céramique est une couche à matrice en carbure de silicium et fibres de carbure de silicium et la couche métallique est une couche en un alliage de zirconium.

12. Procédé de fabrication selon l'une quelconque des revendications 9 à 11, dans lequel la gaine est une gaine d'un combustible nucléaire pour un réacteur à eau légère, de préférence à eau pressurisée.

13. Procédé de fabrication d'un réservoir tubulaire à gaz liquide ou solide ou à ergol, dont la paroi comprend une couche en une céramique ou un composite à matrice céramique dont la face interne est revêtue d'une couche métallique, **caractérisé en ce qu'**il comprend au moins la mise en oeuvre du procédé de métallisation selon l'une quelconque des revendications 1 à 8.

14. Procédé de fabrication selon la revendication 13, dans lequel la couche en céramique ou composite à matrice céramique forme la face externe de la paroi du réservoir et la couche métallique forme la face interne de la paroi du réservoir.

**FIG. 1**

**FIG. 2**

FIG. 3

FIG. 4

FIG. 5

FIG. 6

Europäisches
Patentamt

European
Patent Office

Office européen
des brevets

## RAPPORT DE RECHERCHE EUROPEENNE

Numéro de la demande

EP 23 21 6320

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 3 010 024 A1 (HITACHI LTD [JP]) 20 avril 2016 (2016-04-20) * revendications * * alinéa [0026] * ----- | 1-14 | INV. C04B37/02 G21C3/07 C04B35/645 C04B35/628 |
| A | US 2012/087457 A1 (GARNIER JOHN E [US] ET AL) 12 avril 2012 (2012-04-12) * le document en entier * ----- | 1-14 | |
| A | WO 2013/017621 A1 (COMMISSARIAT ENERGIE ATOMIQUE [FR]; ZABIEGO MAXIME [FR] ET AL.) 7 février 2013 (2013-02-07) * le document en entier * ----- | 1-14 | |

**DOMAINES TECHNIQUES RECHERCHES (IPC)**

C04B
G21J
G21C

Le présent rapport a été établi pour toutes les revendications

| Lieu de la recherche | Date d'achèvement de la recherche | Examinateur |
|---|---|---|
| Munich | 13 mai 2024 | Bonneau, Sébastien |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

**EP 4 389 724 A1**

## ANNEXE AU RAPPORT DE RECHERCHE EUROPEENNE
## RELATIF A LA DEMANDE DE BREVET EUROPEEN NO.

EP 23 21 6320

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

13-05-2024

| Document brevet cité au rapport de recherche | Date de publication | Membre(s) de la famille de brevet(s) | Date de publication |
|---|---|---|---|
| EP 3010024 A1 | 20-04-2016 | EP 3010024 A1 | 20-04-2016 |
| | | JP 6082810 B2 | 15-02-2017 |
| | | JP WO2014199459 A1 | 23-02-2017 |
| | | WO 2014199459 A1 | 18-12-2014 |
| US 2012087457 A1 | 12-04-2012 | US 2012087457 A1 | 12-04-2012 |
| | | WO 2012048071 A1 | 12-04-2012 |
| WO 2013017621 A1 | 07-02-2013 | CN 103732388 A | 16-04-2014 |
| | | EP 2739465 A1 | 11-06-2014 |
| | | FR 2978697 A1 | 08-02-2013 |
| | | HU E037821 T2 | 28-09-2018 |
| | | JP 6140701 B2 | 31-05-2017 |
| | | JP 2014526045 A | 02-10-2014 |
| | | KR 20140048995 A | 24-04-2014 |
| | | PL 2739465 T3 | 30-03-2018 |
| | | RU 2014107945 A | 10-09-2015 |
| | | US 2014153688 A1 | 05-06-2014 |
| | | WO 2013017621 A1 | 07-02-2013 |

EPO FORM P0460

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Caractérisation thermique de structures composites SiC/SiC tubulaires pour applications nucléaires. **L. DUQUESNE.** Génie des procédés. École nationale supérieure d'arts et métiers - ENSAM, 2015
- Experiment and Modelling of Advanced Fuel Rod Cladding Behavior Under LOCA Conditions : Alpha-Beta Phase Transformation Kinetics and EDGAR Methodology. **T. FORGERON et al.** Zirconium in the Nuclear Industry : Twelfth International Symposium. ASTM STP, 2000, vol. 1354, 256-278

- aractérisation thermique de structures composites SiC/SiC tubulaires pour applications nucléaires. **L. DUQUESNE.** Génie des procédés. École nationale supérieure d'arts et métiers - ENSAM, 2015
- Experiment and Modelling of Advanced Fuel Rod Cladding Behavior Under LOCA Conditions: Alpha-Beta Phase Transformation Kinetics and EDGAR Methodology. **T. FORGERON et al.** Zirconium in the Nuclear Industry : Twelfth International Symposium. ASTM STP, 2000, vol. 1354, 256-278